# EUROPEAN PATENT APPLICATION

(11) **EP 4 084 380 A1**
(43) Date of publication of application: **02.11.2022**
(21) Application number: 22163722.6
(22) Date of filing: 23.03.2022
(51) Int. Cl.: H04L 1/18

(54) **SIDELINK HARQ FEEDBACK CUSTOM INDICATION FOR GROUPCAST DRX**

(30) Priority: 30.04.2021 US 202117245257
(71) Applicant: Nokia Technologies Oy, 02610 Espoo (FI)
(72) Inventor: HEGDE, Sudeep, 70376 Stuttgart (DE); SHRIVASTAVA, Rudraksh, 74391 Erligheim (DE); WILDSCHEK, Torsten, Gloucester, GL4 5TW (GB); PANZNER, Berthold, 83607 Holzkirchen (DE)
(74) Representative: Nokia EPO representatives

(57) **Abstract**

A physical sidelink feedback channel custom indication may be defined to indicate a half-duplex collision between one or more sidelink UE to a transmitting UE involved in the collision. In response to the indication, the transmitting UE may not retransmit the packet involved in the collision, and may stay awake for an extended period of time. A receiving UE that identified the collision and transmitted the indication may retransmit the packets involved in the collision to the transmitting UEs that have not yet received the respective packets.

## Description

### BACKGROUND

### Technical Field

The example and non-limiting embodiments relate generally to sidelink communication and, more particularly, to responding to collisions between groupcast group members.

### Brief Description of Prior Developments

It is known, in sidelink groupcast, to make use of an on-duration timer.

### SUMMARY

According to some aspects, there is provided the subject matter of the independent claims. Some further aspects are defined in the dependent claims.

### BRIEF DESCRIPTION OF THE DRAWINGS

The foregoing aspects and other features are explained in the following description, taken in connection with the accompanying drawings, wherein:
FIG. 1 is a block diagram of one possible and non-limiting exemplary system in which the exemplary embodiments may be practiced;
FIG. 2 is a diagram illustrating features as described herein;
FIG. 3 is a flowchart illustrating features as described herein;
FIG. 4 is a flowchart illustrating steps as described herein; and
FIG. 5 is a flowchart illustrating steps as described herein.

### DETAILED DESCRIPTION OF EMBODIMENTS

The following abbreviations that may be found in the specification and/or the drawing figures are defined as follows:
- 3GPP: third generation partnership project
- 5G: fifth generation
- 5GC: 5G core network
- ACK: acknowledgment
- AMF: access and mobility management function
- CE: control element
- CU: central unit
- DRX: discontinuous reception
- DTX: discontinuous transmission
- DU: distributed unit
- eNB (or eNodeB): evolved Node B (e.g., an LTE base station)
- EN-DC: E-UTRA-NR dual connectivity
- en-gNB or En-gNB: node providing NR user plane and control plane protocol terminations towards the UE, and acting as secondary node in EN-DC
- E-UTRA: evolved universal terrestrial radio access, i.e., the LTE radio access technology
- gNB (or gNodeB): base station for 5G/NR, i.e., a node providing NR user plane and control plane protocol terminations towards the UE, and connected via the NG interface to the 5GC
- HARQ: hybrid automatic repeat request
- I/F: interface
- L1: layer 1
- LTE: long term evolution
- MAC: medium access control
- MME: mobility management entity
- NACK: negative acknowledgment
- ng or NG: new generation
- ng-eNB or NG-eNB: new generation eNB
- NR: new radio
- N/W or NW: network
- PDB: packet delay budget
- PDCCH: physical downlink control channel
- PDCP: packet data convergence protocol
- PHY: physical layer
- PSCCH: physical sidelink control channel
- PSFCH: physical sidelink feedback channel
- PSFCH-CI: physical sidelink feedback channel custom indication
- PSSCH: physical sidelink shared channel
- RAN: radio access network
- RF: radio frequency
- RLC: radio link control
- RNTI: radio network temporary identifier
- RRH: remote radio head
- RRC: radio resource control
- RS: reference signal
- RTT: round-trip time
- RU: radio unit
- R-UE: relay-capable user equipment
- Rx: receiver
- SCI: sidelink control information
- SDAP: service data adaptation protocol
- SGW: serving gateway
- SL: sidelink
- SLCS: sidelink configured scheduling
- SLCS-RNTI: sidelink configured scheduling radio network temporary identifier
- SL-RNTI: sidelink radio network temporary identifier
- SMF: session management function
- TB: transport block
- Tx: transmitter
- UE: user equipment (e.g., a wireless, typically mobile device)
- UPF: user plane function

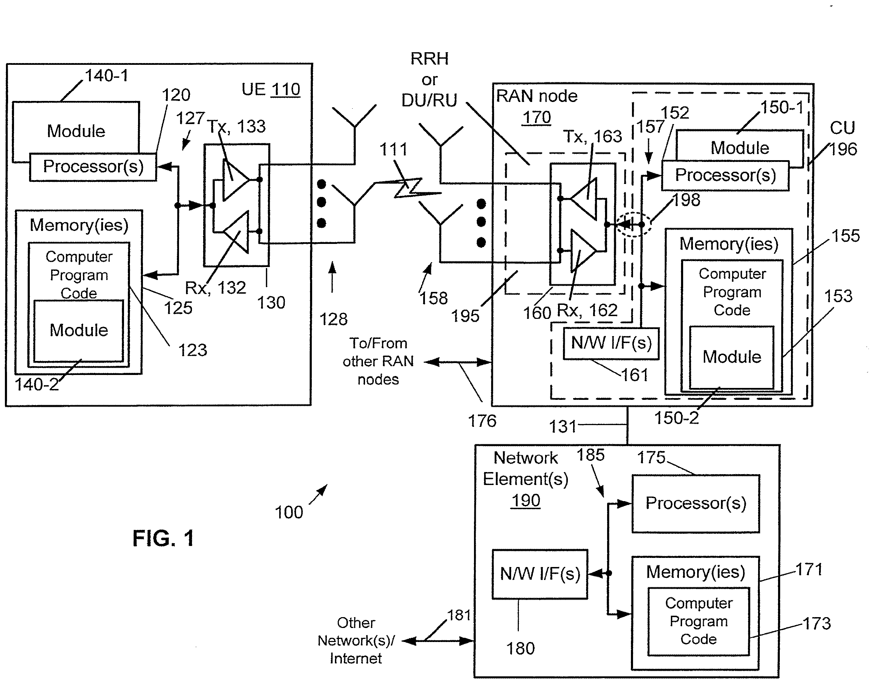

Turning to FIG. 1, this figure shows a block diagram of one possible and non-limiting example in which the examples may be practiced. A user equipment (UE) 110, radio access network (RAN) node 170, and network element(s) 190 are illustrated. In the example of FIG. 1, the user equipment (UE) 110 is in wireless communication with a wireless network 100. A UE is a wireless device that can access the wireless network 100. The UE 110 includes one or more processors 120, one or more memories 125, and one or more transceivers 130 interconnected through one or more buses 127. Each of the one or more transceivers 130 includes a receiver, Rx, 132 and a transmitter, Tx, 133. The one or more buses 127 may be address, data, or control buses, and may include any interconnection mechanism, such as a series of lines on a motherboard or integrated circuit, fiber optics or other optical communication equipment, and the like. The one or more transceivers 130 are connected to one or more antennas 128. The one or more memories 125 include computer program code 123. The UE 110 includes a module 140, comprising one of or both parts 140-1 and/or 140-2, which may be implemented in a number of ways. The module 140 may be implemented in hardware as module 140-1, such as being implemented as part of the one or more processors 120. The module 140-1 may be implemented also as an integrated circuit or through other hardware such as a programmable gate array. In another example, the module 140 may be implemented as module 140-2, which is implemented as computer program code 123 and is executed by the one or more processors 120. For instance, the one or more memories 125 and the computer program code 123 may be configured to, with the one or more processors 120, cause the user equipment 110 to perform one or more of the operations as described herein. The UE 110 communicates with RAN node 170 via a wireless link 111.

Although not illustrated in FIG. 1, the UE 110 may also communicate with other UEs via short range communication technologies, such as Bluetooth^{®}. If wireless communication with a network is unavailable or not possible, or in addition to network communication, the UE 110 may be capable of sidelink communication with other UEs.

The RAN node 170 in this example is a base station that provides access by wireless devices such as the UE 110 to the wireless network 100. The RAN node 170 may be, for example, a base station for 5G, also called New Radio (NR). In 5G, the RAN node 170 may be a NG-RAN node, which is defined as either a gNB or a ng-eNB. A gNB is a node providing NR user plane and control plane protocol terminations towards the UE, and connected via the NG interface to a 5GC (such as, for example, the network element(s) 190). The ng-eNB is a node providing E-UTRA user plane and control plane protocol terminations towards the UE, and connected via the NG interface to the 5GC. The NG-RAN node may include multiple gNBs, which may also include a central unit (CU) (gNB-CU) 196 and distributed unit(s) (DUs) (gNB-DUs), of which DU 195 is shown. Note that the DU may include or be coupled to and control a radio unit (RU). The gNB-CU is a logical node hosting RRC, SDAP and PDCP protocols of the gNB or RRC and PDCP protocols of the en-gNB that controls the operation of one or more gNB-DUs. The gNB-CU terminates the F1 interface connected with the gNB-DU. The F1 interface is illustrated as reference 198, although reference 198 also illustrates a link between remote elements of the RAN node 170 and centralized elements of the RAN node 170, such as between the gNB-CU 196 and the gNB-DU 195. The gNB-DU is a logical node hosting RLC, MAC and PHY layers of the gNB or en-gNB, and its operation is partly controlled by gNB-CU. One gNB-CU supports one or multiple cells. One cell is supported by only one gNB-DU. The gNB-DU terminates the F1 interface 198 connected with the gNB-CU. Note that the DU 195 is considered to include the transceiver 160, e.g., as part of a RU, but some examples of this may have the transceiver 160 as part of a separate RU, e.g., under control of and connected to the DU 195. The RAN node 170 may also be an eNB (evolved NodeB) base station, for LTE (long term evolution), or any other suitable base station or node.

The RAN node 170 includes one or more processors 152, one or more memories 155, one or more network interfaces (N/W I/F(s)) 161, and one or more transceivers 160 interconnected through one or more buses 157. Each of the one or more transceivers 160 includes a receiver, Rx, 162 and a transmitter, Tx, 163. The one or more transceivers 160 are connected to one or more antennas 158. The one or more memories 155 include computer program code 153. The CU 196 may include the processor(s) 152, memories 155, and network interfaces 161. Note that the DU 195 may also contain its own memory/memories and processor(s), and/or other hardware, but these are not shown.

The RAN node 170 includes a module 150, comprising one of or both parts 150-1 and/or 150-2, which may be implemented in a number of ways. The module 150 may be implemented in hardware as module 150-1, such as being implemented as part of the one or more processors 152. The module 150-1 may be implemented also as an integrated circuit or through other hardware such as a programmable gate array. In another example, the module 150 may be implemented as module 150-2, which is implemented as computer program code 153 and is executed by the one or more processors 152. For instance, the one or more memories 155 and the computer program code 153 are configured to, with the one or more processors 152, cause the RAN node 170 to perform one or more of the operations as described herein. Note that the functionality of the module 150 may be distributed, such as being distributed between the DU 195 and the CU 196, or be implemented solely in the DU 195.

The one or more network interfaces 161 communicate over a network such as via the links 176 and 131. Two or more gNBs 170 may communicate using, e.g., link 176. The link 176 may be wired or wireless or both and may implement, for example, an Xn interface for 5G, an X2 interface for LTE, or other suitable interface for other standards.

The one or more buses 157 may be address, data, or control buses, and may include any interconnection mechanism, such as a series of lines on a motherboard or integrated circuit, fiber optics or other optical communication equipment, wireless channels, and the like. For example, the one or more transceivers 160 may be implemented as a remote radio head (RRH) 195 for LTE or a distributed unit (DU) 195 for gNB implementation for 5G, with the other elements of the RAN node 170 possibly being physically in a different location from the RRH/DU, and the one or more buses 157 could be implemented in part as, for example, fiber optic cable or other suitable network connection to connect the other elements (e.g., a central unit (CU), gNB-CU) of the RAN node 170 to the RRH/DU 195. Reference 198 also indicates those suitable network link(s).

It is noted that description herein indicates that "cells" perform functions, but it should be clear that equipment which forms the cell will perform the functions. The cell makes up part of a base station. That is, there can be multiple cells per base station. For example, there could be three cells for a single carrier frequency and associated bandwidth, each cell covering one-third of a 360 degree area so that the single base station's coverage area covers an approximate oval or circle. Furthermore, each cell can correspond to a single carrier and a base station may use multiple carriers. So if there are three 120 degree cells per carrier and two carriers, then the base station has a total of 6 cells.

The wireless network 100 may include a network element or elements 190 that may include core network functionality, and which provides connectivity via a link or links 181 with a further network, such as a telephone network and/or a data communications network (e.g., the Internet). Such core network functionality for 5G may include access and mobility management function(s) (AMF(s)) and/or user plane functions (UPF(s)) and/or session management function(s) (SMF(s)). Such core network functionality for LTE may include MME (Mobility Management Entity)/SGW (Serving Gateway) functionality. These are merely exemplary functions that may be supported by the network element (s) 190, and note that both 5G and LTE functions might be supported. The RAN node 170 is coupled via a link 131 to a network element 190. The link 131 may be implemented as, e.g., an NG interface for 5G, or an S1 interface for LTE, or other suitable interface for other standards. The network element 190 includes one or more processors 175, one or more memories 171, and one or more network interfaces (N/W I/F(s)) 180, interconnected through one or more buses 185. The one or more memories 171 include computer program code 173. The one or more memories 171 and the computer program code 173 are configured to, with the one or more processors 175, cause the network element 190 to perform one or more operations.

The wireless network 100 may implement network virtualization, which is the process of combining hardware and software network resources and network functionality into a single, software-based administrative entity, a virtual network. Network virtualization involves platform virtualization, often combined with resource virtualization. Network virtualization is categorized as either external, combining many networks, or parts of networks, into a virtual unit, or internal, providing network-like functionality to software containers on a single system. Note that the virtualized entities that result from the network virtualization are still implemented, at some level, using hardware such as processors 152 or 175 and memories 155 and 171, and also such virtualized entities create technical effects.

The computer readable memories 125, 155, and 171 may be of any type suitable to the local technical environment and may be implemented using any suitable data storage technology, such as semiconductor based memory devices, flash memory, magnetic memory devices and systems, optical memory devices and systems, fixed memory and removable memory. The computer readable memories 125, 155, and 171 may be means for performing storage functions. The processors 120, 152, and 175 may be of any type suitable to the local technical environment, and may include one or more of general purpose computers, special purpose computers, microprocessors, digital signal processors (DSPs) and processors based on a multicore processor architecture, as non-limiting examples. The processors 120, 152, and 175 may be means for performing functions, such as controlling the UE 110, RAN node 170, and other functions as described herein.

In general, the various embodiments of the user equipment 110 can include, but are not limited to, cellular telephones such as smart phones, tablets, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, tablets with wireless communication capabilities, as well as portable units or terminals that incorporate combinations of such functions. In addition, various embodiments of the user equipment 110 can include, but are not limited to, devices integrated into vehicles, infrastructure associated with vehicular travel, wearable devices used by pedestrians or other non-vehicular users of roads, user equipment unrelated to traffic users, and user equipment configured to participate in sidelink scenarios, such as public safety user equipment and/or other commercial user equipment.

Features as described herein generally relate to, while not being limited to, new radio (NR) sidelink (SL) enhancements. For example, NR SL methods may be implemented to provide communication between a vehicle and a network, infrastructure(s), other vehicle(s), or other road user(s) in the surrounding/immediate area. Such communication may enable proximity service (ProSe), or transmission of information about the surrounding environment, between devices in close proximity, for example device-to-device (D2D) communication technology. Such direct communication may be available even when network coverage is unavailable. Additionally or alternatively, NR SL methods may be implemented in scenarios unrelated to traffic users, such as public safety scenarios and/or commercial scenarios. Enhancements to sidelink procedures may be applicable in these vehicle-to-everything (V2X) and other use cases. It should be noted that enhancements to sidelink procedures may not be limited to groupcast procedures; a person of ordinary skill in the art would understand that the present disclosure may relate to sidelink unicast, multicast, and/or broadcast procedures as well.

Features as described herein generally relate to various timers in the context of sidelink discontinuous reception (DRX) for groupcast communications.

It may be noted that problems related to groupcast inactivity timer may be addressed in R2-2101727 (RAN2#113). However, example embodiments of the present disclosure may address misaligned activity times of group members, and/or may address a scenario in which on-duration timer is supported for SL groupcast, but details about when inactivity timer is supported are undefined.

Example embodiments of the present disclosure may be applicable in (conventional) Sidelink relay scenarios.

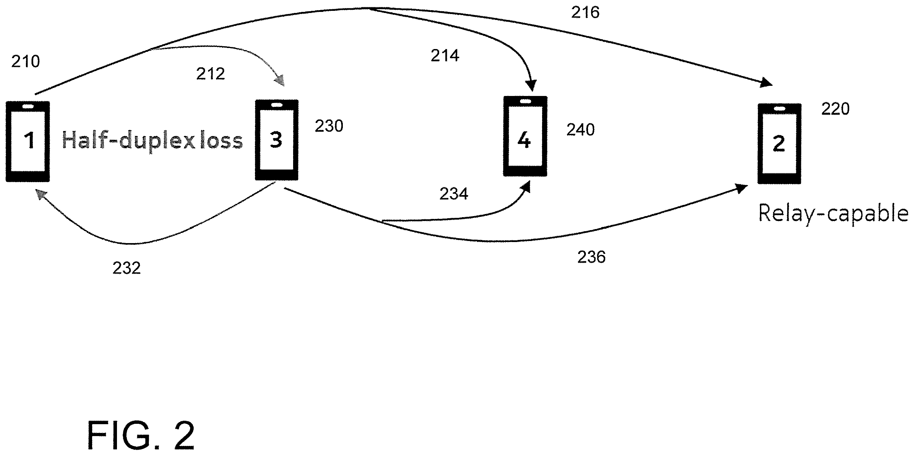

Features as described herein generally relate to sidelink groupcast communications. More specifically, features as described herein may relate to a half-duplex issue that might cause packet losses for group members which transmit at the same time occasion. Referring now to FIG. 2, illustrated is an example of a half-duplex collision between UE1 (210) and UE3 (230). This half-duplex collision may be detected by UE2 (220), which may be a relay-capable UE. In the example of FIG. 2, UE1 (210) and UE3 (230) may transmit a groupcast message at the same time. UE1 (210) may transmit a groupcast message (212, 214, 216) to UE3 (230), UE4 (240), and UE2 (220). UE3 (230) may transmit a groupcast message (232, 234, 236) to UE1 (210), UE4 (240), and UE2 (220). Because groupcast message 212 from UE1 (210) and groupcast message 232 from UE3 (230) are transmitted at the same time occasion/slot, UE1 (210) and UE3 (230) might not receive from each other, resulting in a half-duplex loss. However, the other group members may be able to detect both transmissions, for example if they are transmitted on different frequency resources. In the example of FIG. 2, UE2 (220) (relay-capable UE) may be aware of the half-duplex collision between UE1 (210) and UE3 (230). If UE1 (210) and UE3 (230) are not notified about the collision, they may miss also the retransmissions from each other, if the DRX on-duration timer or another timer expires, such as a retransmission timer (Tx-Rx perspective) or a HARQ timer (RTT-Tx-Rx perspective). In other words, UE1 (210) and UE3 (230) may only retransmit, and not receive, during DRX OFF, if HARQ timers are used.

In another example, where a relay-capable UE of the group may be pre-configured to detect transmissions from outside the group (e.g. based on UE IDs), one or more of the message transmitted at the same time may be transmitted by UE outside the group. For example, UE1 (210) may transmit a groupcast message (212, 214, 216) to UE3 (230), UE4 (240), and UE2 (220) at the same time occasion/slot that a message is transmitted to UE1 (210), UE3 (230), UE4 (240), and UE2 (220) from outside the group. The relay-capable UE2 (220) may be able to determine that both the message from UE1 (210) and the message from a UE outside the group were transmitted at the same time occasion/slot, and therefore that the UE1 (210) may not have received the message from the UE outside the group. This scenario may be considered half-duplex collision detection by the R-UE UE2 (220). The message from UE1 (210) may include an ID that the UE2 (220) may recognize as belonging to a UE of the group, while the message from the UE outside the group might include an ID that the UE2 (220) cannot recognize/does not recognize as belonging to a UE of the group. Based on the unrecognized ID in the message from the UE outside the group, the UE2 (220) may be able to determine that a collision has occurred with a UE outside the group. In an example embodiment, the R-UE UE2 (220) may be pre-configured with the transmission/reception IDs used by UEs in the group for communications outside the group. This pre-configured information may allow the R-UE to recognize half-duplex collision.

In another example embodiment, where a relay-capable UE of the group may be pre-configured to detect transmissions from outside the group (e.g. based on UE IDs), a UE within the group may transmit a message to a UE outside the group. This message might not be a groupcast message; for example, it may be a unicast message. For example, UE1 (210) might transmit a message to a UE outside the group at the same time occasion/slot that message 232 is transmitted by UE3 (230) to UE1 (210). The relay-capable UE2 (220) may be able to determine that both the message from UE1 (210) to the UE outside the group and the message from UE3 (230) to UE1 (210) were transmitted at the same time occasion/slot, and therefore that the UE1 (210) may not have received the message from UE3 (230), i.e. 232. This scenario may be considered half-duplex collision detection by the R-UE UE2 (220).

In another example, UE1 (210) and UE3 (230) might miss retransmissions from each other if the group inactivity timer is configured to start only based on certain conditions or for certain groupcast transmissions and not for all groupcast transmissions. In this example, if a UE misses a transmission which starts the DRX inactivity timer, the UE may miss more transmissions within the group if there are further transmissions during an ongoing inactivity timer. This example may be considered to correspond to the RAN2 agreement 'At least, on-duration timer is supported for SL groupcast. FFS for the need and detailed condition when inactivity timer is supported'.

It may be noted that, in the UE-to-UE relay context, when a relay UE is configured for groupcast, it may be undefined how the relay UE may be notified, by the groupcast transmitter, on which transmissions to perform relay. It may also be undefined how the relay UE may determine the remaining packet delay budget. Example embodiments of the present disclosure may relate to these scenarios. Example embodiments of the present disclosure may additionally or alternatively relate to multi-hop relays considering forward compatibility.

In an example embodiment of the present disclosure, when a relay-capable UE (R-UE) detects a half-duplex collision between two group members, the R-UE may notify the two (or more) transmitting UEs about the collision with the HARQ feedback resource configured for the corresponding transmissions using a new physical sidelink feedback channel (PSFCH) message, e.g. PSFCH Custom Indication (PSFCH-CI). For example, in the example of FIG. 2, when relay-capable UE2 (220) in the group detects the half-duplex collision between UE1 (210) and UE3 (230), the UE2 (220) may notify each of the UE1 (210) and UE3 (230) about the collision via transmission of a single, separate PSFCH-CI from the relay-capable UE2 (220). These PSFCH-CI may each be transmitted in the respective PSFCH slot configured for the R-UE to transmit to each of the UE1 (210) and UE3 (230). These PSFCH slots may be different, and may be based on the initial groupcast/unicast transmission of each of the UE1 (210) and UE3 (230).

In an example embodiment, if so preconfigured, upon receiving the PSFCH-CI from R-UE (or any UE in the group, if so preconfigured), for example UE2 (220), UE1 (210) and UE3 (230) may take special/preconfigured/predetermined action(s). For example, UE1 (210) and/or UE3 (230) (i.e. the colliding/transmitting UEs) may extend their DRX ON duration in order to receive the missed transmission(s). Additionally or alternatively, the transmitting UE1 (210) and/or UE3 (230) may not perform HARQ retransmissions, as the retransmissions may be delegated to R-UE2 (220). In an example embodiment, the R-UE may also provide the missing sidelink discontinuous reception inactivity timer configuration(s) to the group members, if it is included in the initial transmission(s).

In an example embodiment, the Relay-UE may utilize the remaining packet delay budget (PDB), provided by the Tx-UE in its SCI (1st stage/2nd stage) or as a MAC CE/upper layer message, to decide whether to relay the received transmission to the group. This may be useful in the case of UE-to-NW, UE-to-UE, and/or multi-hop relay scenarios. Based on the received indication of remaining PDB, the R-UE may determine which, if any, PSFCH to send to a given Tx-UE. The remaining PDB may be the budget for retransmitting a collided groupcast packet/message.

In an example embodiment, the remaining PDB may be indicated within each groupcast transmission from a Tx-UE (e.g. 212, 214, 216, 232, 234, and/or 236) as an information element in the Sidelink Control Information (SCI). The SCI may be transmitted in 2 stages (i.e. transmissions) in 5G-NR Sidelink. An indication of the remaining PDB (e.g. an absolute value, max threshold value, map value, one-bit, etc.) may be included in the 1st Stage SCI or the 2nd Stage SCI. The 1st-stage SCI mainly carries information regarding the PSSCH resources and information for decoding the 2nd-stage SCI (e.g. time-frequency resources of PSSCH/PSFCH, the priority of this TB transmission, etc.) which are mainly used for channel sensing purposes, to be decodable by any UE. The 2nd-stage SCI mainly carries the remaining scheduling information for the PSSCH decoding by the target UE (e.g. MCS, UE-specific DMRS, NDI, RV, HARQ process ID, etc.). Both source ID and destination ID may be carried in the 2nd-stage SCI to reduce the payload size of the 1st-stage SCI, with the cost of the decoding attempts on two SCIs for all UEs.

In an example embodiment, a Tx-UE may request/be provided an indication of the remaining PDB from upper layers based, at least partially, on UE implementation or a network configuration. In an example embodiment, an upper layer message indicating a remaining PDB may only be used for some transmission, e.g. only for transmission with specific PDB requirements. In other words, an upper layer message might not be used to indicate a remaining PDB where the remaining PDB associated with a transmission does not meet one or more requirements. Based on this upper layers indication, the Tx-UE may indicate the remaining PDB to a relay-UE in a 1st/2nd stage SCI, so that the relay-UE may determine the remaining PDB.

Example embodiments of the present disclosure may be applicable in a scenario in which a group of UEs are configured with HARQ option-1 (i.e. NACK may be transmitted on common PSFCH resources). The UEs may be configured with sidelink groupcast DRX, which may be determined by the DRX-on-duration-timer of the group. Additionally or alternatively, the UEs may or may not be configured to use an inactivity timer. Additionally or alternatively, the group of UEs may or may not comprise relay UEs.

Example embodiments of the present disclosure may be applicable in a scenario in which a group of UEs are configured with HARQ option-2 (i.e. both ACK and NACK may be transmitted on dedicated PSFCH resources). The UEs may be configured with sidelink groupcast DRX, which may be determined by the DRX-on-duration-timer of the group. Additionally or alternatively, the UEs may or may not be configured to use an inactivity timer. Additionally or alternatively, the group of UEs may or may not comprise relay UEs.

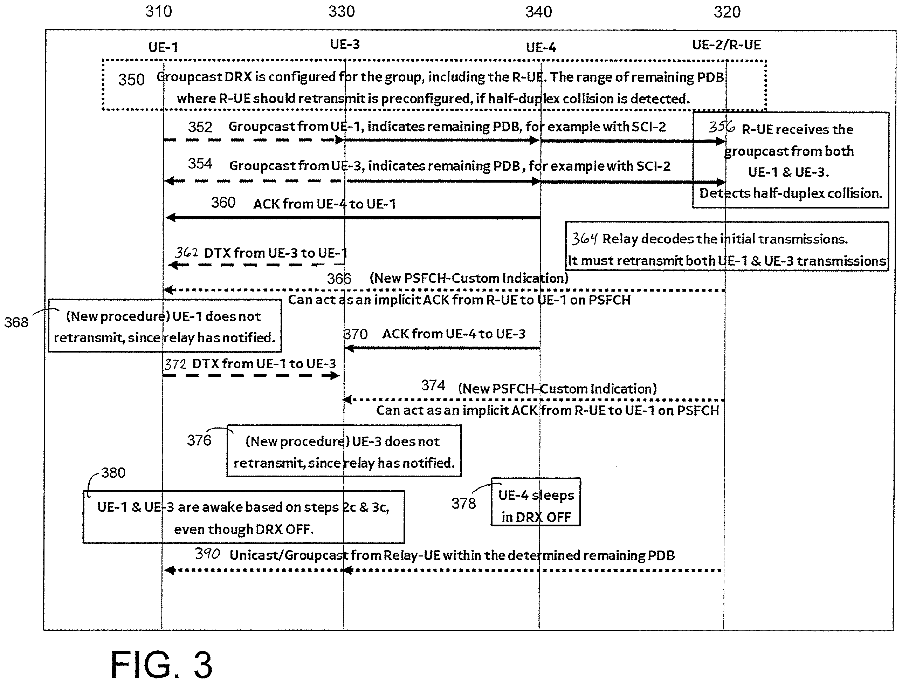

Referring now to FIG. 3, illustrated is an example of groupcast communication between members of a group implementing example embodiments of the present disclosure. In this example, a group of four UEs is considered, but a group of UEs may comprise fewer or more UEs. The UEs may be of a same or different types (e.g. vehicle UE, roadside UE, public safety device, commercial device, etc.). The UEs may have the same or different capabilities. In the example of FIG. 3, the group of UEs may be configured with HARQ option-2 (i.e. both ACK and NACK may be transmitted on dedicated PSFCH resources). The UEs may be configured with sidelink groupcast DRX, which may be determined by the DRX-on-duration-timer of the group. In this example, DRX-inactivity timer might not be configured to the group. The example of FIG. 3 is for illustration only; other scenarios are possible. At least some other scenarios are discussed below.

Referring now to FIG. 3, the groupcast group comprises UE-1 (310), UE-3 (330), UE-4 (340), and UE-2 (320). UE-2 (320) may comprise a relay-capable UE. At 350, preconfiguration may occur. During preconfiguration, all the group members may be configured with groupcast DRX, including the R-UE (i.e. UE-2 (320)) which is part of the group and relay capable. The R-UE may also be configured with the range of the remaining packet delay budget (PDB), within which the R-UE may relay the (re)transmissions if half-duplex collision is detected. Upon detecting half-duplex collision, the R-UE may be configured to transmit PSFCH-CI to the transmitting/colliding UEs in the PSFCH slot configured for HARQ feedback for each respective UE involved in the collision, if the R-UE has received the original transmission successfully. In other words, the R-UE may individually transmit PSFCH-CI to each of the colliding UEs during a (same or different) corresponding time, frequency, and/or PSFCH slot(s).

If the R-UE receives the transmission correctly and R-UE determines that it cannot support the remaining PDB, the R-UE may transmit the legacy ACK, but the R-UE might not relay the transmission. If the R-UE receives the transmission correctly and it can support the remaining PDB, R-UE may transmit PSFCH-CI.

If the R-UE does not receive the transmission correctly, the R-UE may transmit legacy NACK to indicate that the transmission was incorrectly received, whether or not the R-UE determines that it cannot support the remaining PDB. In other words, R-UE might not transmit PSFCH-CI where a transmission is incorrectly received, and/or where the R-UE determines that the remaining PDB is too short for transmission of PSFCH-CI. If R-UE does not detect half-duplex collision, R-UE might not transmit PSFCH-CI, but rather may transmit a legacy ACK/NACK.

In another example embodiment, any ACK from the R-UE may be seen, by the receiving UE, as a confirmation that R-UE has detected half-duplex commission/collision. Accordingly, the receiving UE may determine that there may be a need for on-duration extension, and that the R-UE may perform retransmission, etc. according to an example embodiment of the present disclosure. In this case, a PSFCH-CI may be used in combination with assignment of a special meaning to the legacy ACK based on the groupcast pre-configuration. For example, a DTX-ed PSFCH feedback from the R-UE in this case may mean correct reception of the transmission for R-UE.

At 352, 354, and 356, UE-1 (310) and UE-3 (330) may both transmit in the same timeslot or in partially overlapping timeslots. At 352, UE-1 (310) may groupcast to UE-3 (330), UE-4 (340), and UE-2 (320). The message may indicate/include an indication of the remaining PDB. For example, the remaining PDB of the transport block may be indicated with SCI-2 (i.e. second stage SCI associated with the transmission). At 354, UE-3 (330) may groupcast to UE-1 (310), UE-4 (340), and UE-2 (320). The message may indicate/include an indication of the remaining PDB. For example, the remaining PDB of the transport block may be indicated with SCI-2 (i.e. second stage SCI associated with the transmission). UE-1 (310) and UE-3 (330) might not receive groupcast message(s) from each other due to half-duplex loss. UE-4 (340) and UE-2 (320) may receive the groupcast message(s) from UE-1 (310) and UE-3 (330) .

At 356, UE-2/R-UE (320) may receive the groupcast transmissions from both UE-1 (310) and UE-3 (330). Therefore, R-UE (320) may be aware of the half-duplex loss suffered by UE-1 (310) and UE-3 (330). Based on the timing and/or resources used for the groupcast messages 352 and 354, the UE-2/R-UE (320) may be able to detect a half-duplex collision between the groupcast messages 352 and 354. Accordingly, the UE-2/R-UE (320) may be able to determine that there is a half-duplex collision between UE-1 (310) and UE-3 (330).

R-UE (320) may decode the initial transmissions 352, 354 from UE-1 (310) and UE-3 (330). R-UE (320) may now have the information of the remaining PDB of the transmissions from UE-1 (310) and UE-3 (330). R-UE (320) may transmit the PSFCH-CI (Custom Indication) to UE-1 (310) and UE-3 (330) as HARQ feedback (e.g. at 366, 374), based on a determination by R-UE (320) that it may relay the transmissions from UE-1 (310) and UE-3 (330) as a groupcast or unicast, based on pre-configuration (e.g. 350).

At 360, 362, 364, 366, PSFCH feedback may be transmitted in response to the transmission 352 of UE-1 (310). At 360, UE-4 (340) may send ACK to UE-1 (310) . At 362, UE-3 (330) might not send anything (i.e. discontinuous transmission (DTX)) to UE-1 (310), as UE-3 (330) might not be aware that the feedback slot associated with the transmission (352) of UE-1 (310) is occurring due to the half-duplex collision.

At 364, relay UE-2 (320) may decode the initial transmissions from UE-1 (310) and UE-3 (330). Relay UE-2 (320) may determine to retransmit both UE-1 (310) and UE-3 (330) transmissions (352, 354).

At 366, R-UE (320) may send/transmit PSFCH-CI to UE-1 (310) instead of sending the ACK to UE-1 (310). In an example embodiment, the PSFCH-CI may act/be interpreted as an implicit ACK from R-UE (320) to UE-1 (310). Based on the received PSFCH-CI, the UE-1 (310) may determine that it has missed some transmission within the group. Therefore, it might determine/decide not to go to sleep, even when the configured DRX-on-duration-timer expires. For example, the UE-1 (310) may determine not to go to sleep for a certain configured duration. For example, the UE-1 (310) may determine not to go to sleep until a transmission is received. The DRX-on-duration-timer may or may not expire while the UE-1 (310) waits for one or both of those conditions to occur. Therefore, UE-1 (310) may extend its ON duration until one or both of those conditions occur. UE-1 (310) may not perform HARQ retransmission, even if it has received NACK from one of the groupcast receivers, if it determines that the R-UE (320) may relay this transmission as a groupcast in a later step/timeslot before the expiry of PDB.

At 368, UE-1 (310) may not retransmit the colliding groupcast based, at least partially, on the PSFCH-CI received from (366) received from UE-2 (320).

At 370, 372, 374, PSFCH feedback may be transmitted in response to the transmission 354 of UE-3 (330). At 370, UE-4 (340) may send ACK to UE-3 (330). At 372, UE-1 (310) may not send anything (DTX) (i.e. discontinuous transmission (DTX)) to UE-3 (330), as UE-1 (310) might not be aware that the feedback slot associated with the transmission (354) of UE-3 (330) is occurring due to the half-duplex collision.

At 374, R-UE (320) may send/transmit PSFCH-CI to UE-3 (330) instead of sending the ACK to UE-3 (330). In an example embodiment, the PSFCH-CI may act/be interpreted as an implicit ACK from R-UE (320) to UE-3 (330). Based on the received PSFCH-CI, the UE-3 (330) may determine that it has missed some transmission within the group. Therefore, it might determine/decide not to go to sleep, even when the configured DRX-on-duration-timer expires. For example, the UE-3 (330) may determine not to go to sleep for a certain configured duration. For example, the UE-3 (330) may determine not to go to sleep until a transmission is received. The DRX-on-duration-timer may or may not expire while the UE-3 (330) waits for one or both of those conditions to occur. Therefore, UE-3 (330) may extend its ON duration until one or both of those conditions occur. UE-3 (330) may not perform HARQ retransmission, even if it has received NACK from one of the groupcast receivers, if it determines that the R-UE (320) may relay this transmission as a groupcast in a later step/timeslot before the expiry of PDB.

At 376, UE-3 (330) may not retransmit the colliding groupcast based, at least partially, on the PSFCH-CI received from (374) received from UE-2 (320).

At 378, UE-4 (340) may have received all transmissions in this DRX ON time period, so it may go to sleep. At 380, UE-1 (310) and UE-3 (330) may be awake based on received PSFCH-CI 366, 374, even though in a DRX OFF time period.

At 390, the R-UE (320) may perform the relay operation as groupcast or unicast, based on pre-configuration 350, before the remaining PDB expires (i.e. within the PDB). For example, the R-UE (320) relay groupcast message 352 to UE-3 (330) and/or relay groupcast message 354 to UE-1 (310).

In the present disclosure, the terms "receiver," "groupcast receiver," "receiving UE," and "Rx-UE" may be considered synonymous and may be interpreted to mean any sidelink UE that receives a groupcast transmission. For example, in the example of FIG. 3, UE-4 (340) and UE-2 (320) may be considered receivers of groupcast messages 352, 354. In the present disclosure, the terms "transmitter," "groupcast transmitter," "transmitting UE," and "Tx-UE" may be considered synonymous and may be interpreted to mean any sidelink UE that transmits a groupcast transmission. For example, in the example of FIG. 3, UE 1 (310) and UE-3 (330) may be considered transmitters.

In an example embodiment, the groupcast transmissions may use the L1/L2 signaling (e.g. 1st or 2nd stage SCI or MAC control element (CE)) to notify the groupcast receivers about the remaining PDB of the packet transmitted. For example, in the example of FIG. 3, groupcast messages 352 and/or 354 may be transmitted via L1/L2 signaling. L3 signaling may also be possible.

In another example embodiment, a groupcast transmitter may indicate the packet generation time of the packet in the transmitted transport block (TB), such that the receiver may compute the remaining PDB based on the pre-determined/indicated PDB (i.e. the total PDB). For example, in the example of FIG. 3, UE-1 (310) may indicate a packet generation time of a packet for groupcast message 352, and the UE-2 (320) may compute the remaining PDB based on this packet generation time, the pre-configuration 350, and/or the total PDB. In an example embodiment, when there are multiple packets in the transmitted TB, the Tx-UE can indicate the remaining PDB of the packet whose PDB expires first as the remaining PDB or generation time of the TB.

Depending on the configured usage of PSFCH-CI and the groupcast configuration, in an example embodiment the PSFCH-CI transmitted by a group member to a TX-UE may be interpreted by the Tx-UE as one or more of the following: a collision notification or a no-collision notification; a trigger for the activation of an inactivity timer; a stop retransmission notification (i.e. Tx-UE which receives this may not perform HARQ retransmissions. It may extend its DRX ON duration, possibly only in listen-only mode); a trigger for inter-UE resource coordination. For example, in the example of FIG. 3, the transmitters UE-1 (310) and UE-3 (330) may interpret the PSFCH-CI 355, 374 as a notification of a collision and/or a notification to stop retransmission. While not illustrated, in another example where an inactivity timer is configured, a PSFCH-CI may, additionally or alternatively, be interpreted by a transmitter as a trigger for activation of the inactivity timer. While not illustrated, in another example, a PSFCH-CI may, additionally or alternatively, be interpreted by a transmitter as a trigger for inter-UE resource coordination.

In an example embodiment, if an inactivity timer is not configured for groupcast, upon reception of a groupcast transmission, the groupcast receivers may extend their DRX ON time for the same duration as the remaining PDB of the received transmission. If the groupcast receivers extend their DRX ON time for the remaining duration of PDB, the receivers may be able to determine that retransmissions will not take place later than the remaining PDB indicated/determined for the corresponding transmission. In other words, the receivers may determine that they may be able to sleep after the remaining duration of PDB expires, because a retransmission will not occur after that time period and the receivers will, therefore, not miss a retransmission by entering a DRX OFF state.

In an example embodiment, a groupcast transmitter may indicate to the group members (for example through SCI or MAC CE, L1/L2 signaling) the need for DRX on-time extension. This may be used as a trigger by the groupcast receivers to start the group DRX inactivity timer, which extends the ON-duration of the group members. The extended ON-duration may be used by the group members for reception and/or transmission and/or both. It may be noted that, in the current specification for Uu DRX-inactivity timer, the DRX inactivity timer may be started by the UE every time it receives a PDCCH transmission. In SL, it may be expected, based on the RAN2 agreements, that SL DRX-inactivity timer may be applied based on certain needs and conditions.

In an example embodiment, the R-UE in the group may be aware of the DRX and HARQ-related timers of the group (e.g. HARQ Round-Trip-Timer or retransmission timer) and may adjust its relayed transmission such that all groupcast receivers may be able to receive the relayed transmissions (i.e. when receivers are awake).

In an example embodiment, upon receiving the proposed PSFCH-CI from a group member, the Tx-UE may be configured to stay awake by extending the DRX ON-time for a fixed duration. For example, extended ON-time can be extended by the maximum offset applicable to HARQ retransmissions (e.g. 32 ms). In another example embodiment, the extended DRX ON-time of the Tx-UE may use any existing HARQ-related timers, or a new timer as specified.

In an example embodiment, upon detecting the half-duplex collision, the R-UE may send an inter-UE resource coordination trigger (PSFCH-CI) as the PSFCH feedback to the group members experiencing half-duplex loss (UE-1 and UE-3 in Fig. 2). In other words, the transmitters may interpret the PSFCH-CI as a trigger for inter-UE resource coordination. The inter-UE resource coordination trigger may also act as an implicit ACK transmitted by the R-UE to the transmitter.

In an example embodiment, if the Tx-UE (e.g. UE-1 (310) or UE-3 (330) in FIG. 3) is aware, based on pre-configuration, that the RUE (e.g. UE-2 (320) in FIG. 3) might not be allowed/enabled to retransmit the packet before the remaining PDB expires, the Tx-UE may perform the retransmission by itself, even when it receives the PSFCH-CI from the R-UE. In other words, the TX-UE may decide to retransmit the packet even though it received PSFCH-CI from the R-UE. In another example embodiment, the PSFCH-CI may be configured to indicate that the collision has occurred and/or trigger inter-UE coordination, but may not be configured to notify the Tx-UE to stop retransmission. Accordingly, the Tx-UE may perform retransmission even through PSFCH-CI has been received by the Tx-UE because the PSFCH-CI does not function to prevent the retransmission by the Tx-UE.

In an example embodiment, the R-UE, after decoding the packet received in the earlier transmission, may not relay the packet, if R-UE determines, based on pre-configured remaining PDB thresholds, that the Tx-UE may perform retransmissions. In this case, the RUE may transmit the normal ACK/NACK to the Tx-UE as HARQ feedback. In other words, if the remaining PDB does not make it possible for the R-UE to perform unicast/groupcast relay in response to a half-duplex collision, Tx-UE(s) may perform the retransmission after receiving PSFCH-CI.

In an example embodiment, when the R-UE relays the transmission after sending the PSFCH-CI to the Tx-UE, the R-UE may expect PSFCH feedback from only the UEs to which it has transmitted the PSFCH-CI (e.g. UE-1 (310) and UE-3 (330) in FIG. 3). However, if it receives feedback from other group members (e.g. group members not involved in the collision), the R-UE might, additionally, perform specified HARQ operations as usual. For example, in the example of FIG. 3, if the R-UE (320) groupcasts the relayed TB at 390, it may expect ACK/NACK from only UE-1 (310) and UE-3 (330), but not UE-4 (340), because UE-4 (340) might have gone to sleep, as it has already received the transmission successfully. If UE-4 (340) has not received a groupcast message previously, UE-4 (340) might be able to receive the relayed transmission from R-UE (320) and send HARQ feedback to R-UE (320) in response. If UE-4 (340) cannot decode the relayed transmission, UE-4 (340) may send a NACK to RUE (320). R-UE (320) may schedule further retransmission(s) as necessary based on feedback from non-collision and/or collision group UE.

In an example embodiment, if HARQ option-1 (only NACK) is used for the groupcast transmissions, an additional PSFCH resource may be pre-configured for each groupcast transmission, to be used to transmit the PSFCH-CI from the R-UE. It may also be possible to transmit the collision notification on the same resource configured for HARQ option-1, if the Tx-UE is configured to monitor both NACK and PSFCH-CI on the option-1 PSFCH resource.

In an example embodiment, if there are no relay-capable UEs in the group, all groupcast members may be configured to transmit the PSFCH-CI to the group members experiencing half-duplex loss (e.g. UE-1 (310) and UE-3 (330) in FIG. 3). In other words, the members of a group may be able to determine, based on the timing and/or resources used for received groupcast transmissions, that a half-duplex collision has occurred. In response, the members of the group may notify the transmitting UEs of the half-duplex loss by transmitting PSFCH-CI. The transmitting UEs may receive one or more PSFCH-CI and may, in response, be able to determine that the half-duplex loss has occurred and act based on that determination. For example, the Tx-UEs which have been notified about the half-duplex loss may extend the DRX ON-time to receive a missed transmission, and not just to transmit HARQ retransmission to a UE which has not sent HARQ feedback.

In an example embodiment, if the Tx-UE which has received the PSFCH-CI is aware of the identity of the groupcast member which has also suffered half-duplex loss (i.e. the UE with which its groupcast transmission has collided), the Tx-UE may initiate a retransmission of the packet as a Unicast transmission to the identified peer UE. This may be possible when all but one groupcast member have transmitted PSFCH feedback (ACK/NACK/PSFCH-CI) to the Tx-UE, which may enable the Tx-UE to identify the colliding UE based on the process of elimination.

In an example embodiment, upon receiving PSFCH-CI from a group member, the Tx-UE (i.e. receiver of PSFCH-CI) might be configured to start the DRX inactivity timer. In an example embodiment, the Tx-UE may not be allowed to perform new transmissions within the extended-ON duration, but only listen/monitor/receive.

In an example embodiment, upon receiving the PSFCH-CI from a group member, where no inactivity timer is configured for the groupcast, the extended-ON duration of the Tx-UE may use the HARQ retransmission timer of the original transmission (e.g. 352 for UE-1 (310, or 354 for UE-3 (330) in FIG. 3) as the reference duration for ON-duration extension. Additionally or alternatively, a pre-configured value may be used to extend the on-duration, which may be triggered when PSFCH-CI is received.

In an example embodiment, upon sending the PSFCH-CI to the transmitting UE in the group, the R-UE may include, in the relayed transmission, the group inactivity timer configuration missed by a group member due to half-duplex loss.

In an example embodiment, any/all group members may be configured to transmit a collision/no-collision indication on PSFCH to the transmitting UEs within the group. The transmitting UE (receiver of PSFCH) may be configured to take specific actions upon reception of the (no) collision indication, such as initiating inter-UE resource coordination.

While example embodiments of the present disclosure are described with respect to groupcast, they may also be applicable to broadcast and/or unicast communications.

In an example embodiment, transmission of a PSFCH-CI by a relay-enabled UE or by a group of UEs might not be triggered by detection of a collision of messages from UEs within or outside a group of UEs. Instead, a relay-enabled UE may transmit the PSFCH-CI in order to accept/reject the task of re-transmitting a message originally transmitted by another UE, and/or in order to cause a changes in the DRX cycle of other UEs. For example, the relay-enabled UE may transmit the PSFCH-CI in order to cause range extension and/or on-demand re-transmissions. For example, the PSFCH-CI may be used as an acceptance of a message (ACK) and confirmation for taking over re-transmissions. For example, the R-UE may transmit the PSFCH-CI in response to a special request by a Tx_UE. Other triggers for the R-UE to transmit a PSFCH-CI as described in example embodiments of the present disclosure may occur to a person of ordinary skill in the art.

In an example embodiment, where a R-UE receives colliding messages from Tx-UEs, it is possible that at least one of the messages is successfully received while at least one other of the messages in not successfully received. In response, the R-UE may transmit a PSFCH-CI to acknowledge receipt of the successfully received message, and may transmit a (legacy) NACK to indicate that a message was not successfully received.

In an example embodiment, the remaining PDB may be different for transmissions from different Tx-UEs (e.g. UE-1 (310) and UE-3 (330)). Accordingly, the R-UE may make independent decisions to retransmit (or not) based on the indicated/computed remaining PDB for each Tx-UE. The retransmission decision may also impact whether the R-UE transmits PSFCH-CI or legacy PSFCH ACK/NACK, as described above.

In an example embodiment, a Tx-UE may indicate strict PDB and non-strict PDBs and, optionally, a range of additional acceptable delay). For example, where non-strict PDB is indicated, a preferred PDB may be X ms with plus/minus y ms of additional delay acceptable. This may provide flexibility for R-UE to select a retransmission option. In an example embodiment, the strict and non-strict PDBs may be configurable per transmission or per TB. For example, the Tx-UE may want to perform retransmission if the R-UE cannot perform relay before the strict PDB expires. In an example, the relay may still perform retransmission before the expiry of the non-strict PDB, to provide additional redundancy to the transmission. In an example embodiment, an R-UE may determine whether to retransmit a message based, at least partially, on a characteristic of a remaining PDB, such as whether the remaining PDB meets a strict or non-strict PDB requirement(s) indicated by the Tx-UE. Additionally or alternatively, the characteristic of the remaining PDB may be that there is still some remaining PDB, but the R-UE determines that it cannot retransmit because of unavailability of transmission slots during this time, or based on the R-UE's own (expected) transmissions/receptions before the expiry of remaining PDB.

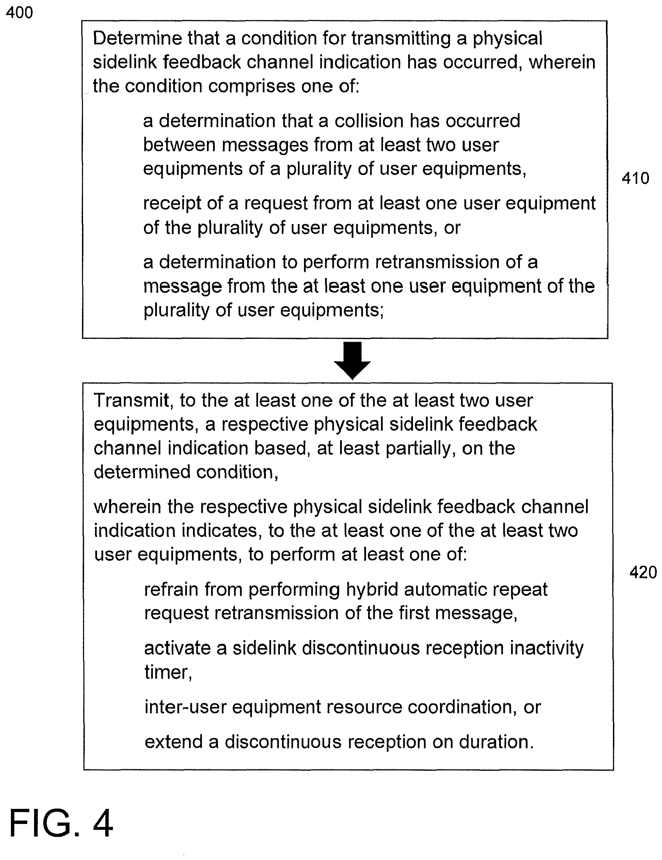

FIG. 4 illustrates the potential steps of an example method 400. The example method 400 may include: determining that at least one condition for transmitting a physical sidelink feedback channel indication has occurred, wherein the at least one condition comprises at least one of: a determination that a collision has occurred between messages from at least two user equipments of a plurality of user equipments, receipt of a request from at least one user equipment of the plurality of user equipments, or a determination to perform retransmission of a message from at least one user equipment of the plurality of user equipments, 410; and transmitting, to at least one of the at least two user equipments, a respective physical sidelink feedback channel indication based, at least partially, on the determination that the at least one condition occurred, 420. The respective physical sidelink feedback channel indication may indicate, to the at least one of the at least two user equipments, to perform at least one of: refrain from performing hybrid automatic repeat request retransmission of the first message, activate a sidelink discontinuous reception inactivity timer, inter-user equipment resource coordination, or extend a discontinuous reception on duration. The example method 400 may be performed by a user equipment, which may or not be relay-enabled, and which may or may not belong to a group of user equipments for groupcast.

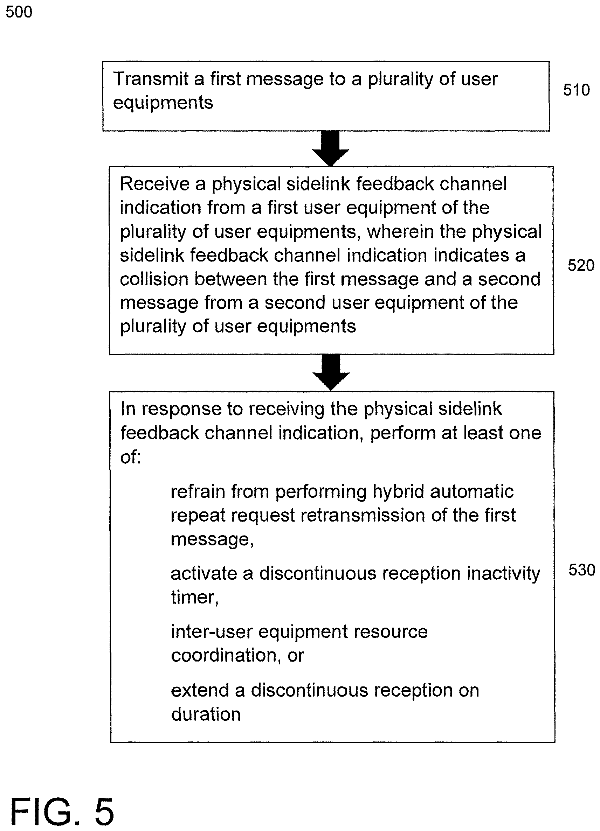

FIG. 5 illustrates the potential steps of an example method 500. The example method 500 may include: transmitting a first message to a plurality of user equipments, 510; receiving a physical sidelink feedback channel indication from a first user equipment of the plurality of user equipments, wherein the physical sidelink feedback channel indication indicates a collision between the first message and a second message from a second user equipment of the plurality of user equipments, 520; and, in response to receiving the physical sidelink feedback channel indication, performing at least one of: refraining from performing hybrid automatic repeat request retransmission of the first message, activating a discontinuous reception inactivity timer, inter-user equipment resource coordination, or extending a discontinuous reception on duration, 530. The example method 500 may be performed by a user equipment, which may or may not belong to a group of user equipments for groupcast.

In accordance with one example embodiment, an apparatus may comprise: at least one processor; and at least one memory including computer program code; the at least one memory and the computer program code configured to, with the at least one processor, cause the apparatus at least to perform: determine that at least one condition for transmitting a physical sidelink feedback channel indication has occurred, wherein the at least one condition may comprise at least one of: a determination that a collision has occurred between messages from at least two user equipments of a plurality of user equipments, receipt of a request from at least one user equipment of the plurality of user equipments, or a determination to perform retransmission of a message from at least one user equipment of the plurality of user equipments; and transmit, to at least one of the at least two user equipments, a respective physical sidelink feedback channel indication based, at least partially, on the determination that the at least one condition occurred, wherein the respective physical sidelink feedback channel indication may indicate, to the at least one of the at least two user equipments, to perform at least one of: refrain from performing hybrid automatic repeat request retransmission of the first message, activate a sidelink discontinuous reception inactivity timer, inter-user equipment resource coordination, or extend a discontinuous reception on duration.

The example apparatus may be further configured to: receive a message from a first user equipment of the at least two user equipments; and receive a message from a second user equipment of the at least two user equipments.

The determination that the collision has occurred between the messages from the at least two user equipments may comprise the example apparatus being further configured to: determine that the message from the first user equipment and the message from the second user equipment were transmitted during at least partially overlapping time periods.

Transmitting the respective physical sidelink feedback channel indication may comprise the example apparatus being further configured to: transmit the respective physical sidelink feedback channel indication in a physical sidelink feedback channel slot configured for hybrid automatic repeat request feedback based on a determination that at least one of the message received from the first user equipment or the message received from the second user equipment was successfully received.

The example apparatus may be further configured to: determine whether to retransmit one or more of the messages from the at least two user equipments, wherein the respective physical sidelink feedback channel indication may be based, at least partially, on the determination.

The respective physical sidelink feedback channel indication may be configured to indicate an acknowledgment or a negative acknowledgement of at least one of the messages.

The example apparatus may comprise a relay user equipment.

The example apparatus may be further configured to: determine a remaining packet delay budget for retransmission of at least one of the messages from the at least two user equipments of the plurality of user equipments.

The remaining packet delay budget may be determined based, at least partially, on one of: a first stage sidelink control information, a second stage sidelink control information, or a medium access control control element associated with the at least one message.

The remaining packet delay budget for the at least one of the messages may be determined based, at least partially, on a packet generation time associated with the at least one message.

The example apparatus may be further configured to: retransmit at least one of the messages from a first of the at least two user equipments to at least a second of the at least two user equipments based, at least partially, on at least one of: the remaining packet delay budget, a characteristic associated with the remaining packet delay budget, or an extended discontinuous reception on duration.

Retransmitting the at least one message from the first of the at least two user equipments to at least the second of the at least two user equipments may be further based on at least one of: a hybrid automatic repeat request round-trip timer associated with the plurality of user equipments, or a retransmission timer associated with the plurality of user equipments.

The example apparatus may be further configured to: receive feedback from the at least the second of the at least two user equipments in response to the at least one retransmitted message. The at least one retransmitted message may comprise a configuration for the sidelink discontinuous reception inactivity timer.

The example apparatus may be further configured to: receive a configuration comprising an indication of a range of the remaining packet delay budget.

The plurality of user equipments may be configured with one of: hybrid automatic repeat request option one, or hybrid automatic repeat request option two.

The plurality of user equipments may be configured with the hybrid automatic repeat request option one, wherein transmitting the respective physical sidelink feedback channel indication may comprise the example apparatus being further configured to transmit the respective physical sidelink feedback channel indication with one of: a preconfigured physical sidelink feedback channel resource, or a resource configured for the hybrid automatic repeat request option one.

The sidelink discontinuous reception inactivity timer may be configured for the plurality of user equipments.

Transmitting the respective physical sidelink feedback channel indication may comprise the example apparatus being further configured to transmit the respective physical sidelink feedback channel indication as one of a groupcast transmission or a unicast transmission.

In accordance with one aspect, an example method may be provided comprising: determining that a condition for transmitting a physical sidelink feedback channel indication has occurred, wherein the condition may comprise one of: a determination that at least one condition for transmitting a physical sidelink feedback channel indication has occurred, wherein the at least one condition may comprise at least one of: a determination that a collision has occurred between messages from at least two user equipments of a plurality of user equipments, receipt of a request from at least one user equipment of the plurality of user equipments, or a determination to perform retransmission of a message from at least one user equipment of the plurality of user equipments; and transmitting, with an apparatus to at least one of the at least two user equipments, a respective physical sidelink feedback channel indication based, at least partially, on the determination that the at least one condition occurred, wherein the respective physical sidelink feedback channel indication may indicate, to the at least one of the at least two user equipments, to perform at least one of: refrain from performing hybrid automatic repeat request retransmission of the first message, activate a sidelink discontinuous reception inactivity timer, inter-user equipment resource coordination, or extend a discontinuous reception on duration.

The example method may further comprise: receiving a message from a first user equipment of the at least two user equipments; and receiving a message from a second user equipment of the at least two user equipments.

The determination that the collision has occurred between the messages from the at least two user equipments may comprise: determining that the message from the first user equipment and the message from the second user equipment were transmitted during at least partially overlapping time periods.

The transmitting of the respective physical sidelink feedback channel indication may comprise: transmitting the respective physical sidelink feedback channel indication in a physical sidelink feedback channel slot configured for hybrid automatic repeat request feedback based on a determination that at least one of the message received from the first user equipment or the message received from the second user equipment was successfully received.

The example method may further comprise: determining whether to retransmit one or more of the messages from the at least two user equipments, wherein the respective physical sidelink feedback channel indication may be based, at least partially, on the determination.

The respective physical sidelink feedback channel indication may be configured to indicate an acknowledgment or a negative acknowledgement of at least one of the messages.

The apparatus may comprise a relay user equipment.

The example method may further comprise: determining a remaining packet delay budget for retransmission of at least one of the messages from the at least two user equipments of the plurality of user equipments.

The remaining packet delay budget may be determined based, at least partially, on one of: a first stage sidelink control information, a second stage sidelink control information, or a medium access control control element associated with the at least one message.

The remaining packet delay budget for the at least one of the messages may be determined based, at least partially, on a packet generation time associated with the at least one message.

The example method may further comprise: retransmitting at least one of the messages from a first of the at least two user equipments to at least a second of the at least two user equipments based, at least partially, on at least one of: the remaining packet delay budget, a characteristic associated with the remaining packet delay budget, or an extended discontinuous reception on duration.

The retransmitting of the at least one message from the first of the at least two user equipments to at least the second of the at least two user equipments may be further based on at least one of: a hybrid automatic repeat request round-trip timer associated with the plurality of user equipments, or a retransmission timer associated with the plurality of user equipments.

The example method may further comprise: receiving feedback from the at least the second of the at least two user equipments in response to the at least one retransmitted message.

The at least one retransmitted message may comprise a configuration for the sidelink discontinuous reception inactivity timer.

The example method may further comprise: receiving a configuration comprising an indication of a range of the remaining packet delay budget.

The plurality of user equipments may be configured with one of: hybrid automatic repeat request option one, or hybrid automatic repeat request option two.

The plurality of user equipments may be configured with the hybrid automatic repeat request option one, wherein the transmitting of the respective physical sidelink feedback channel indication may comprise transmitting the respective physical sidelink feedback channel indication with one of: a preconfigured physical sidelink feedback channel resource, or a resource configured for the hybrid automatic repeat request option one.

The sidelink discontinuous reception inactivity timer may be configured for the plurality of user equipments.

The transmitting of the respective physical sidelink feedback channel indication may comprise transmitting the respective physical sidelink feedback channel indication as one of a groupcast transmission or a unicast transmission.

In accordance with one example embodiment, an apparatus may comprise: circuitry configured to perform: determine that at least one condition for transmitting a physical sidelink feedback channel indication has occurred, wherein the at least one condition may comprise at least one of: a determination that a collision has occurred between messages from at least two user equipments of a plurality of user equipments, receipt of a request from at least one user equipment of the plurality of user equipments, or a determination to perform retransmission of a message from at least one user equipment of the plurality of user equipments; and transmit, to at least one of the at least two user equipments, a respective physical sidelink feedback channel indication based, at least partially, on the determination that the at least one condition occurred, wherein the respective physical sidelink feedback channel indication may indicate, to the at least one of the at least two user equipments, to perform at least one of: refrain from performing hybrid automatic repeat request retransmission of the first message, activate a sidelink discontinuous reception inactivity timer, inter-user equipment resource coordination, or extend a discontinuous reception on duration.

In accordance with one example embodiment, an apparatus may comprise: processing circuitry; memory circuitry including computer program code, the memory circuitry and the computer program code configured to, with the processing circuitry, enable the apparatus to: determine that at least one condition for transmitting a physical sidelink feedback channel indication has occurred, wherein the at least one condition may comprise at least one of: a determination that a collision has occurred between messages from at least two user equipments of a plurality of user equipments, receipt of a request from at least one user equipment of the plurality of user equipments, or a determination to perform retransmission of a message from at least one user equipment of the plurality of user equipments; and transmit, to at least one of the at least two user equipments, a respective physical sidelink feedback channel indication based, at least partially, on the determination that the at least one condition occurred, wherein the respective physical sidelink feedback channel indication may indicate, to the at least one of the at least two user equipments, to perform at least one of: refrain from performing hybrid automatic repeat request retransmission of the first message, activate a sidelink discontinuous reception inactivity timer, inter-user equipment resource coordination, or extend a discontinuous reception on duration.

As used in this application, the term "circuitry" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor (s), that requires software (e.g., firmware) for operation, but the software may not be present when it is not needed for operation." This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

In accordance with one example embodiment, an apparatus may comprise means for performing: determining that condition for transmitting a physical sidelink feedback channel indication has occurred, wherein the condition may comprise one of: a determination that at least one condition for transmitting a physical sidelink feedback channel indication has occurred, wherein the at least one condition comprises at least one of: a determination that a collision has occurred between messages from at least two user equipments of a plurality of user equipments, receipt of a request from at least one user equipment of the plurality of user equipments, or a determination to perform retransmission of a message from at least one user equipment of the plurality of user equipments; and transmitting, to at least one of the at least two user equipments, a respective physical sidelink feedback channel indication based, at least partially, on the determination that the at least one condition occurred, wherein the respective physical sidelink feedback channel indication may indicate, to the at least one of the at least two user equipments, to perform at least one of: refrain from performing hybrid automatic repeat request retransmission of the first message, activate a sidelink discontinuous reception inactivity timer, inter-user equipment resource coordination, or extend a discontinuous reception on duration.

The means may be further configured to perform: receiving a message from a first user equipment of the at least two user equipments; and receiving a message from a second user equipment of the at least two user equipments.

The determination that the collision has occurred between the messages from the at least two user equipments may comprise means configured to perform: determining that the message from the first user equipment and the message from the second user equipment were transmitted during at least partially overlapping time periods.

The means configured to perform transmitting of the respective physical sidelink feedback channel indication may comprise means configured to perform: transmitting the respective physical sidelink feedback channel indication in a physical sidelink feedback channel slot configured for hybrid automatic repeat request feedback based on a determination that at least one of the message received from the first user equipment or the message received from the second user equipment was successfully received.

The means may be further configured to perform: determining whether to retransmit one or more of the messages from the at least two user equipments, wherein the respective physical sidelink feedback channel indication may be based, at least partially, on the determination.

The respective physical sidelink feedback channel indication may be configured to indicate an acknowledgment or a negative acknowledgement of at least one of the messages.

The apparatus may comprise a relay user equipment.

The means may be further configured to perform: determining a remaining packet delay budget for retransmission of at least one of the messages from the at least two user equipments of the plurality of user equipments.

The remaining packet delay budget may be determined based, at least partially, on one of: a first stage sidelink control information, a second stage sidelink control information, or a medium access control control element associated with the at least one message.

The remaining packet delay budget for the at least one of the messages may be determined based, at least partially, on a packet generation time associated with the at least one message.

The means may be further configured to perform: retransmitting at least one of the messages from a first of the at least two user equipments to at least a second of the at least two user equipments based, at least partially, on at least one of: the remaining packet delay budget, a characteristic associated with the remaining packet delay budget, or an extended discontinuous reception on duration.

The retransmitting of the at least one message from the first of the at least two user equipments to at least the second of the at least two user equipments may be further based on at least one of: a hybrid automatic repeat request round-trip timer associated with the plurality of user equipments, or a retransmission timer associated with the plurality of user equipments.

The means may be further configured to perform: receiving feedback from the at least the second of the at least two user equipments in response to the at least one retransmitted message.

The at least one retransmitted message may comprise a configuration for the sidelink discontinuous reception inactivity timer.

The means may be further configured to perform: receiving a configuration comprising an indication of a range of the remaining packet delay budget.

The plurality of user equipments may be configured with one of: hybrid automatic repeat request option one, or hybrid automatic repeat request option two.

The plurality of user equipments may be configured with the hybrid automatic repeat request option one, wherein the transmitting of the respective physical sidelink feedback channel indication may comprise transmitting the respective physical sidelink feedback channel indication with one of: a preconfigured physical sidelink feedback channel resource, or a resource configured for the hybrid automatic repeat request option one.

The sidelink discontinuous reception inactivity timer may be configured for the plurality of user equipments.

The means configured to perform transmitting of the respective physical sidelink feedback channel indication may comprise means configured to perform transmitting the respective physical sidelink feedback channel indication as one of a groupcast transmission or a unicast transmission.

In accordance with one example embodiment, a non-transitory computer-readable medium comprising program instructions stored thereon which, when executed with at least one processor, cause the at least one processor to: determine that at least one condition for transmitting a physical sidelink feedback channel indication has occurred, wherein the at least one condition may comprise at least one of: a determination that a collision has occurred between messages from at least two user equipments of a plurality of user equipments, receipt of a request from at least one user equipment of the plurality of user equipments, or a determination to perform retransmission of a message from at least one user equipment of the plurality of user equipments; and transmit, to at least one of the at least two user equipments, a respective physical sidelink feedback channel indication based, at least partially, on the determination that the at least one condition occurred, wherein the respective physical sidelink feedback channel indication may indicate, to the at least one of the at least two user equipments, to perform at least one of: refrain from performing hybrid automatic repeat request retransmission of the first message, activate a sidelink discontinuous reception inactivity timer, inter-user equipment resource coordination, or extend a discontinuous reception on duration.

In accordance with another example embodiment, a non-transitory program storage device readable by a machine may be provided, tangibly embodying a program of instructions executable by the machine for performing operations, the operations comprising: determine that at least one condition for transmitting a physical sidelink feedback channel indication has occurred, wherein the at least one condition may comprise at least one of: a determination that a collision has occurred between messages from at least two user equipments of a plurality of user equipments, receipt of a request from at least one user equipment of the plurality of user equipments, or a determination to perform retransmission of a message from at least one user equipment of the plurality of user equipments; and transmit, to at least one of the at least two user equipments, a respective physical sidelink feedback channel indication based, at least partially, on the determination that the at least one condition occurred, wherein the respective physical sidelink feedback channel indication may indicate, to the at least one of the at least two user equipments, to perform at least one of: refrain from performing hybrid automatic repeat request retransmission of the first message, activate a sidelink discontinuous reception inactivity timer, inter-user equipment resource coordination, or extend a discontinuous reception on duration.

In accordance with one example embodiment, an apparatus may comprise: at least one processor; and at least one memory including computer program code; the at least one memory and the computer program code configured to, with the at least one processor, cause the apparatus at least to perform: transmit a first message to a plurality of user equipments; receive a physical sidelink feedback channel indication from a first user equipment of the plurality of user equipments, wherein the physical sidelink feedback channel indication may indicate a collision between the first message and a second message from a second user equipment of the plurality of user equipments; and in response to receiving the physical sidelink feedback channel indication, perform at least one of: refrain from performing hybrid automatic repeat request retransmission of the first message, activate a sidelink discontinuous reception inactivity timer, inter-user equipment resource coordination, or extend a discontinuous reception on duration.

At least one of the first message or the second message may comprise a groupcast message.

The collision between the first message and the second message may comprise a half-duplex collision.

The example apparatus may be further configured to: determine that the first user equipment of the plurality of user equipments cannot retransmit the first message before a remaining packet delay budget expires and, in response, retransmit the first message to the plurality of user equipments.

The example apparatus may be further configured to: receive, from the first user equipment of the plurality of user equipments, a retransmission of the second message.

The extended discontinuous reception on duration may enable reception of a retransmission of the second message.

The retransmission of the second message may comprise a configuration for the sidelink discontinuous reception inactivity timer configuration.

The plurality of user equipments may be configured with one of: hybrid automatic repeat request option one, or hybrid automatic repeat request option two.

The sidelink discontinuous reception inactivity timer may be configured for the plurality of user equipments.

The first user equipment of the plurality of user equipments may comprise a relay user equipment.

The physical sidelink feedback channel indication may indicate an acknowledgment, from the first user equipment, of receiving the first message.

The example apparatus may be further configured to: determine that at least one transmission from the plurality of user equipments has been missed based, at least partially, on the physical sidelink feedback channel indication.

Extending the discontinuous reception on duration may comprise the example apparatus being configured to at least one of: extend the discontinuous reception on duration for a predetermined duration; extend the discontinuous reception on duration to a same duration as a remaining packet delay budget for retransmission of the first message, or monitor for a transmission, wherein the discontinuous reception on duration may be extended until the transmission is received.

The predetermined duration may comprise one of a maximum offset applicable to hybrid automatic repeat request transmissions.

The example apparatus may be further configured to: determine that the first user equipment will retransmit the first message before a remaining packet delay budget or an extended discontinuous reception on duration expires, wherein refraining from performing hybrid automatic repeat request retransmission of the first message may be based, at least partially, on the determination that the first user equipment will retransmit the first message before at least one of: the remaining packet delay budget, or the extended discontinuous reception on duration expires.

The first message may comprise an indication of a remaining packet delay budget for retransmission of the first message.

The example apparatus may be further configured to: indicate to the plurality of user equipments to activate extension of the discontinuous reception on duration, wherein activating the extension of the discontinuous reception on duration may comprise starting and/or extending a group sidelink discontinuous reception inactivity timer.

The example apparatus may be further configured to: retransmit the first message to the second user equipment as a unicast transmission.

Activating the sidelink discontinuous reception inactivity timer may cause the apparatus to not perform transmission within an extended discontinuous reception on duration.

The example apparatus may be further configured to: receive an upper layer message configured to indicate a remaining packet delay budget for retransmission of the first message.

In accordance with one aspect, an example method may be provided comprising: transmitting, with an apparatus, a first message to a plurality of user equipments; receiving a physical sidelink feedback channel indication from a first user equipment of the plurality of user equipments, wherein the physical sidelink feedback channel indication may indicate a collision between the first message and a second message from a second user equipment of the plurality of user equipments; and in response to receiving the physical sidelink feedback channel indication, performing at least one of: refraining from performing hybrid automatic repeat request retransmission of the first message, activating a discontinuous reception inactivity timer, inter-user equipment resource coordination, or extending a discontinuous reception on duration.

At least one of the first message or the second message may comprise a groupcast message.

The collision between the first message and the second message may comprise a half-duplex collision.

The example method may further comprise: determining that the first user equipment of the plurality of user equipments cannot retransmit the first message before a remaining packet delay budget expires and, in response, retransmitting the first message to the plurality of user equipments.

The example method may further comprise: receiving, from the first user equipment of the plurality of user equipments, a retransmission of the second message.

The extended discontinuous reception on duration may enable reception of a retransmission of the second message.

The retransmission of the second message may comprise a configuration for the sidelink discontinuous reception inactivity timer.

The plurality of user equipments may be configured with one of: hybrid automatic repeat request option one, or hybrid automatic repeat request option two.

The sidelink discontinuous reception inactivity timer may be configured for the plurality of user equipments.

The first user equipment of the plurality of user equipments may comprise a relay user equipment.

The physical sidelink feedback channel indication may indicate an acknowledgment, from the first user equipment, of receiving the first message.

The example method may further comprise: determining that at least one transmission from the plurality of user equipments has been missed based, at least partially, on the physical sidelink feedback channel indication.

Extending the discontinuous reception on duration may comprise at least one of: extending the discontinuous reception on duration for a predetermined duration; extending the discontinuous reception on duration to a same duration as a remaining packet delay budget for retransmission of the first message, or monitoring for a transmission, wherein the discontinuous reception on duration may be extended until the transmission is received.

The predetermined duration may comprise one of a maximum offset applicable to hybrid automatic repeat request transmissions.

The example method may further comprise: determining that the first user equipment will retransmit the first message before a remaining packet delay budget or an extended discontinuous reception on duration expires, wherein refraining from performing hybrid automatic repeat request retransmission of the first message may be based, at least partially, on the determination that the first user equipment will retransmit the first message before at least one of: the remaining packet delay budget, or the extended discontinuous reception on duration expires.

The first message may comprise an indication of a remaining packet delay budget for retransmission of the first message.

The example method may further comprise: indicating to the plurality of user equipments to activate extension of the discontinuous reception on duration, wherein activating the extension of the discontinuous reception on duration may comprise at least one of starting a group sidelink discontinuous reception inactivity timer, or extending a group sidelink discontinuous reception inactivity timer.

The example method may further comprise: retransmitting the first message to the second user equipment as a unicast transmission.

Activating the sidelink discontinuous reception inactivity timer may cause the apparatus to not perform transmission within an extended discontinuous reception on duration.

The example method may further comprise: receiving an upper layer message configured to indicate a remaining packet delay budget for retransmission of the first message.

In accordance with one example embodiment, an apparatus may comprise: circuitry configured to perform: transmit a first message to a plurality of user equipments; receive a physical sidelink feedback channel indication from a first user equipment of the plurality of user equipments, wherein the physical sidelink feedback channel indication may indicate a collision between the first message and a second message from a second user equipment of the plurality of user equipments; and in response to receiving the physical sidelink feedback channel indication, perform at least one of: refrain from performing hybrid automatic repeat request retransmission of the first message, activate a sidelink discontinuous reception inactivity timer, inter-user equipment resource coordination, or extend a discontinuous reception on duration.

In accordance with one example embodiment, an apparatus may comprise: processing circuitry; memory circuitry including computer program code, the memory circuitry and the computer program code configured to, with the processing circuitry, enable the apparatus to: transmit a first message to a plurality of user equipments; receive a physical sidelink feedback channel indication from a first user equipment of the plurality of user equipments, wherein the physical sidelink feedback channel indication may indicate a collision between the first message and a second message from a second user equipment of the plurality of user equipments; and in response to receiving the physical sidelink feedback channel indication, perform at least one of: refrain from performing hybrid automatic repeat request retransmission of the first message, activate a sidelink discontinuous reception inactivity timer, inter-user equipment resource coordination, or extend a discontinuous reception on duration.

In accordance with one example embodiment, an apparatus may comprise means for performing: transmitting a first message to a plurality of user equipments; receiving a physical sidelink feedback channel indication from a first user equipment of the plurality of user equipments, wherein the physical sidelink feedback channel indication may indicate a collision between the first message and a second message from a second user equipment of the plurality of user equipments; and in response to receiving the physical sidelink feedback channel indication, performing at least one of: refraining from performing hybrid automatic repeat request retransmission of the first message, activating a discontinuous reception inactivity timer, inter-user equipment resource coordination, or extending a discontinuous reception on duration.

At least one of the first message or the second message may comprise a groupcast message.

The collision between the first message and the second message may comprise a half-duplex collision.

The means may be further configured to perform: determining that the first user equipment of the plurality of user equipments cannot retransmit the first message before a remaining packet delay budget expires and, in response, retransmitting the first message to the plurality of user equipments.

The means may be further configured to perform: receiving, from the first user equipment of the plurality of user equipments, a retransmission of the second message.

The extended discontinuous reception on duration may enable reception of a retransmission of the second message.

The retransmission of the second message may comprise a configuration for the sidelink discontinuous reception inactivity timer.

The plurality of user equipments may be configured with one of: hybrid automatic repeat request option one, or hybrid automatic repeat request option two.

The sidelink discontinuous reception inactivity timer may be configured for the plurality of user equipments.

The first user equipment of the plurality of user equipments may comprise a relay user equipment.

The physical sidelink feedback channel indication may indicate an acknowledgment, from the first user equipment, of receiving the first message.

The means may be further configured to perform: determining that at least one transmission from the plurality of user equipments has been missed based, at least partially, on the physical sidelink feedback channel indication.

Extending the discontinuous reception on duration may comprise at least one of: extending the discontinuous reception on duration for a predetermined duration; extending the discontinuous reception on duration to a same duration as a remaining packet delay budget for retransmission of the first message, or monitoring for a transmission, wherein the discontinuous reception on duration may be extended until the transmission is received.

The predetermined duration may comprise one of a maximum offset applicable to hybrid automatic repeat request transmissions.

The means may be further configured to perform: determining that the first user equipment will retransmit the first message before a remaining packet delay budget or an extended discontinuous reception on duration expires, wherein refraining from performing hybrid automatic repeat request retransmission of the first message may be based, at least partially, on the determination that the first user equipment will retransmit the first message before at least one of: the remaining packet delay budget, or the extended discontinuous reception on duration expires.

The first message may comprise an indication of a remaining packet delay budget for retransmission of the first message.

The means may be further configured to perform: indicating to the plurality of user equipments to activate extension of the discontinuous reception on duration, wherein activating the extension of the discontinuous reception on duration may comprise at least one of starting a group sidelink discontinuous reception inactivity timer or extending a group sidelink discontinuous reception inactivity timer.

The means may be further configured to perform: retransmitting the first message to the second user equipment as a unicast transmission.

Activating the sidelink discontinuous reception inactivity timer may cause the apparatus to not perform transmission within an extended discontinuous reception on duration.

The means may be further configured to perform: receiving an upper layer message configured to indicate a remaining packet delay budget for retransmission of the first message.

In accordance with one example embodiment, a non-transitory computer-readable medium comprising program instructions stored thereon which, when executed with at least one processor, cause the at least one processor to: transmit a first message to a plurality of user equipments; receive a physical sidelink feedback channel indication from a first user equipment of the plurality of user equipments, wherein the physical sidelink feedback channel indication may indicate a collision between the first message and a second message from a second user equipment of the plurality of user equipments; and in response to receiving the physical sidelink feedback channel indication, performing at least one of: refrain from performing hybrid automatic repeat request retransmission of the first message, activate a discontinuous reception inactivity timer, inter-user equipment resource coordination, or extend a discontinuous reception on duration.

In accordance with another example embodiment, a non-transitory program storage device readable by a machine may be provided, tangibly embodying a program of instructions executable by the machine for performing operations, the operations comprising: transmit a first message to a plurality of user equipments; receive a physical sidelink feedback channel indication from a first user equipment of the plurality of user equipments, wherein the physical sidelink feedback channel indication indicates a collision between the first message and a second message from a second user equipment of the plurality of user equipments; and in response to receiving the physical sidelink feedback channel indication, performing at least one of: refrain from performing hybrid automatic repeat request retransmission of the first message, activate a discontinuous reception inactivity timer, inter-user equipment resource coordination, or extend a discontinuous reception on duration.

In accordance with one example embodiment, an apparatus may comprise means for performing: any of the above example methods.

In accordance with one example embodiment, a non-transitory computer-readable medium may comprise program instruction stored thereon for performing a process including a method according to any of the above example methods.

In accordance with one example embodiment, a computer program may comprise instructions stored thereon for performing at least the following: determining that at least one condition for transmitting a physical sidelink feedback channel indication has occurred, wherein the at least one condition may comprise at least one of: a determination that a collision has occurred between messages from at least two user equipments of a plurality of user equipments, receipt of a request from at least one user equipment of the plurality of user equipments, or a determination to perform retransmission of a message from at least one user equipment of the plurality of user equipments; and transmitting, to at least one of the at least two user equipments, a respective physical sidelink feedback channel indication based, at least partially, on the determination that the at least one condition occurred, wherein the respective physical sidelink feedback channel indication may indicate, to the at least one of the at least two user equipments, to perform at least one of: refrain from performing hybrid automatic repeat request retransmission of the first message, activate a sidelink discontinuous reception inactivity timer, inter-user equipment resource coordination, or extend a discontinuous reception on duration.

In accordance with one example embodiment, a computer program may comprise instructions stored thereon for performing at least the following: transmitting a first message to a plurality of user equipments; receiving a physical sidelink feedback channel indication from a first user equipment of the plurality of user equipments, wherein the physical sidelink feedback channel indication may indicate a collision between the first message and a second message from a second user equipment of the plurality of user equipments; and in response to receiving the physical sidelink feedback channel indication, performing at least one of: refraining from performing hybrid automatic repeat request retransmission of the first message, activating a discontinuous reception inactivity timer, inter-user equipment resource coordination, or extending a discontinuous reception on duration.

In accordance with one example embodiment, an apparatus may comprise: at least one processor; and at least one memory including computer program code; the at least one memory and the computer program code configured to, with the at least one processor, cause the apparatus at least to perform: determine that a collision has occurred between messages from at least two user equipments of a plurality of user equipments; and transmit, to at least one of the at least two user equipments, a respective physical sidelink feedback channel indication based, at least partially, on the determined collision, wherein the respective physical sidelink feedback channel indication may indicate, to the at least one of the at least two user equipments, to perform at least one of: refrain from performing hybrid automatic repeat request retransmission of the first message, activate a sidelink discontinuous reception inactivity timer, inter-user equipment resource coordination, or extend a discontinuous reception on duration.

In accordance with one aspect, an example method may be provided comprising: determining that a collision has occurred between messages from at least two user equipments of a plurality of user equipments; and transmitting, with an apparatus to at least one of the at least two user equipments, a respective physical sidelink feedback channel indication based, at least partially, on the determined collision, wherein the respective physical sidelink feedback channel indication may indicate, to the at least one of the at least two user equipments, to perform at least one of: refrain from performing hybrid automatic repeat request retransmission of the first message, activate a sidelink discontinuous reception inactivity timer, inter-user equipment resource coordination, or extend a discontinuous reception on duration.

In accordance with one example embodiment, an apparatus may comprise: circuitry configured to perform: determine that a collision has occurred between messages from at least two user equipments of a plurality of user equipments; and transmit, to at least one of the at least two user equipments, a respective physical sidelink feedback channel indication based, at least partially, on the determined collision, wherein the respective physical sidelink feedback channel indication may indicate, to the at least one of the at least two user equipments, to perform at least one of: refrain from performing hybrid automatic repeat request retransmission of the first message, activate a sidelink discontinuous reception inactivity timer, inter-user equipment resource coordination, or extend a discontinuous reception on duration.

In accordance with one example embodiment, an apparatus may comprise: processing circuitry; memory circuitry including computer program code, the memory circuitry and the computer program code configured to, with the processing circuitry, enable the apparatus to: determine that a collision has occurred between messages from at least two user equipments of a plurality of user equipments; and transmit, to at least one of the at least two user equipments, a respective physical sidelink feedback channel indication based, at least partially, on the determined collision, wherein the respective physical sidelink feedback channel indication may indicate, to the at least one of the at least two user equipments, to perform at least one of: refrain from performing hybrid automatic repeat request retransmission of the first message, activate a sidelink discontinuous reception inactivity timer, inter-user equipment resource coordination, or extend a discontinuous reception on duration.

In accordance with one example embodiment, an apparatus may comprise means for performing: determining that a collision has occurred between messages from at least two user equipments of a plurality of user equipments; and transmitting, to at least one of the at least two user equipments, a respective physical sidelink feedback channel indication based, at least partially, on the determined collision, wherein the respective physical sidelink feedback channel indication may indicate, to the at least one of the at least two user equipments, to perform at least one of: refrain from performing hybrid automatic repeat request retransmission of the first message, activate a sidelink discontinuous reception inactivity timer, inter-user equipment resource coordination, or extend a discontinuous reception on duration.

In accordance with one example embodiment, a non-transitory computer-readable medium comprising program instructions stored thereon which, when executed with at least one processor, cause the at least one processor to: determine that a collision has occurred between messages from at least two user equipments of a plurality of user equipments; and transmit, to at least one of the at least two user equipments, a respective physical sidelink feedback channel indication based, at least partially, on the determined collision, wherein the respective physical sidelink feedback channel indication may indicate, to the at least one of the at least two user equipments, to perform at least one of: refrain from performing hybrid automatic repeat request retransmission of the first message, activate a sidelink discontinuous reception inactivity timer, inter-user equipment resource coordination, or extend a discontinuous reception on duration.

In accordance with another example embodiment, a non-transitory program storage device readable by a machine may be provided, tangibly embodying a program of instructions executable by the machine for performing operations, the operations comprising: determine that a collision has occurred between messages from at least two user equipments of a plurality of user equipments; and transmit, to at least one of the at least two user equipments, a respective physical sidelink feedback channel indication based, at least partially, on the determined collision, wherein the respective physical sidelink feedback channel indication may indicate, to the at least one of the at least two user equipments, to perform at least one of: refrain from performing hybrid automatic repeat request retransmission of the first message, activate a sidelink discontinuous reception inactivity timer, inter-user equipment resource coordination, or extend a discontinuous reception on duration.

It should be understood that the foregoing description is only illustrative. Various alternatives and modifications can be devised by those skilled in the art. For example, features recited in the various dependent claims could be combined with each other in any suitable combination(s). In addition, features from different embodiments described above could be selectively combined into a new embodiment. Accordingly, the description is intended to embrace all such alternatives, modification and variances which fall within the scope of the appended claims.

## Claims

1. An apparatus comprising means for performing:
determining that at least one condition for transmitting a physical sidelink feedback channel indication has occurred, wherein the at least one condition comprises at least one of:
a determination that a collision has occurred between messages from at least two user equipments of a plurality of user equipments,
receipt of a request from at least one user equipment of the plurality of user equipments, or
a determination to perform retransmission of a message from at least one user equipment of the plurality of user equipments; and
transmitting, to at least one of the at least two user equipments, a respective physical sidelink feedback channel indication based, at least partially, on the determination that the at least condition occurred,
wherein the respective physical sidelink feedback channel indication indicates, to the at least one of the at least two user equipments, to perform at least one of:
refrain from performing a hybrid automatic repeat request retransmission of a first message,
activate a sidelink discontinuous reception inactivity timer,
inter-user equipment resource coordination, or
extend a discontinuous reception on duration.

2. The apparatus of claim 1, wherein the means are further configured to perform:
receiving a message from a first user equipment of the at least two user equipments; and
receiving a message from a second user equipment of the at least two user equipments.

3. The apparatus of claim 2, wherein the determination that the collision has occurred between the messages from the at least two user equipments comprises:
determining that the message from the first user equipment and the message from the second user equipment were transmitted during at least partially overlapping time periods.

4. The apparatus of claim 2 or 3, wherein the transmitting of the respective physical sidelink feedback channel indication comprises:
transmitting the respective physical sidelink feedback channel indication in a physical sidelink feedback channel slot configured for hybrid automatic repeat request feedback based on a determination that at least one of the message received from the first user equipment or the message received from the second user equipment was successfully received.

5. The apparatus of any of claims 1 through 4, wherein the means are further configured to perform:
determining whether to retransmit one or more of the messages from the at least two user equipments, wherein the respective physical sidelink feedback channel indication is based, at least partially, on the determination.

6. The apparatus of any of claims 1 through 5, wherein the respective physical sidelink feedback channel indication is configured to indicate an acknowledgment or a negative acknowledgement of at least one of the messages.

7. The apparatus of any of claims 1 through 6, wherein the apparatus comprises a relay user equipment.

8. The apparatus of any of claims 1 through 7, wherein the means are further configured to perform:
determining a remaining packet delay budget for retransmission of at least one of the messages from the at least two user equipments of the plurality of user equipments.

9. The apparatus of claim 8, wherein the remaining packet delay budget is determined based, at least partially, on one of:
a first stage sidelink control information,
a second stage sidelink control information, or
a medium access control control element
associated with at least one of the messages.

10. The apparatus of claim 8 or claim 9, wherein the means are further configured to perform:
retransmitting at least one of the messages from a first of the at least two user equipments to at least a second of the at least two user equipments based, at least partially, on at least one of:
the remaining packet delay budget,
a characteristic associated with the remaining packet delay budget, or
an extended discontinuous reception on duration.

11. The apparatus of claim 10, wherein the retransmitting of the at least one of the messages from the first of the at least two user equipments to at least the second of the at least two user equipments is further based on at least one of:
a hybrid automatic repeat request round-trip timer associated with the plurality of user equipments, or
a retransmission timer associated with the plurality of user equipments.

12. An apparatus comprising means for performing:
transmitting a first message to a plurality of user equipments;
receiving a physical sidelink feedback channel indication from a first user equipment of the plurality of user equipments, wherein the physical sidelink feedback channel indication indicates a collision between the first message and a second message from a second user equipment of the plurality of user equipments; and
in response to receiving the physical sidelink feedback channel indication, performing at least one of:
refraining from performing hybrid automatic repeat request retransmission of the first message,
activating a discontinuous reception inactivity timer,
inter-user equipment resource coordination, or
extending a discontinuous reception on duration.

13. The apparatus of claim 12, wherein the means are further configured to perform:
receiving, from the first user equipment of the plurality of user equipments, a retransmission of the second message.

14. The apparatus of claim 12, wherein the extended discontinuous reception on duration enables reception of a retransmission of the second message.

15. A method comprising:
determining that at least one condition for transmitting a physical sidelink feedback channel indication has occurred, wherein the at least one condition comprises at least one of:
a determination that a collision has occurred between messages from at least two user equipments of a plurality of user equipments,
receipt of a request from at least one user equipment of the plurality of user equipments, or
a determination to perform retransmission of a message from at least one user equipment of the plurality of user equipments; and
transmitting, to at least one of the at least two user equipments, a respective physical sidelink feedback channel indication based, at least partially, on the determination that the at least condition occurred,
wherein the respective physical sidelink feedback channel indication indicates, to the at least one of the at least two user equipments, to perform at least one of:
refrain from performing a hybrid automatic repeat request retransmission of a first message,
activate a sidelink discontinuous reception inactivity timer,
inter-user equipment resource coordination, or
extend a discontinuous reception on duration.
